# EUROPÄISCHE PATENTSCHRIFT

(11) **EP 3 056 457 B1**
(45) Veröffentlichungstag und Bekanntmachung des Hinweises auf die Patenterteilung: **13.09.2017**
(21) Anmeldenummer: 16155158.5
(22) Anmeldetag: 11.02.2016
(51) Int. Cl.: B65G 51/30

(54) **ROHRPOSTSTATION**
TUBE POST STATION
STATION DE TUBE PNEUMATIQUE

(30) Priorität: 11.02.2015 AT 501022015
(43) Veröffentlichungstag der Anmeldung: 17.08.2016
(73) Patentinhaber: Ing. Sumetzberger GmbH, 1110 Wien (AT)
(72) Erfinder: Friedrich, Peter, 1040 Wien (AT)
(74) Vertreter: Müllner, Martin

(56) Entgegenhaltungen:
- WO-A1-2012/110444
- DE-A1- 19 714 507
- US-A1- 2011 146 835

## Beschreibung

### Technisches Gebiet

Die vorliegende Erfindung betrifft eine Rohrpoststation zum Empfang von Rohrposthülsen, zum Entleeren derselben und zur Übergabe deren Inhalts in einen Auffangbehälter sowie ein Verfahren zum Steuern einer Rohrpostanlage mit einer derartigen Rohrpoststation.

### Stand der Technik

In modernen Krankenhäusern sind zentrale Labors aus Gründen der Wirtschaftlichkeit, Effizienz und Qualität üblich. Sehr oft sind diese über Rohrpost mit den einzelnen Abteilungen des Krankenhauses verbunden.

Rohrpostanlagen bestehen aus einer Vielzahl an Geräten wie Stationen und Weichen, welche über Rohrleitungen sowie Strom- und Informationsleitungen miteinander verbunden sind. Bei Großanlagen sind diese Rohrleitungen in mehrere Linien unterteilt, um eine effiziente Auslastung zu erreichen. Die Übergabe der Hülsen zwischen den Linien erfolgt über Überfahrtseinheiten. Die Anbindung von Rohrpoststationen an Laboranalysesysteme erfolgt normalerweise direkt.

Die Anbindung von Blutanalysesystemen an automatische Rohrpoststationen wurde in den letzten Jahren u.a. von der Anmelderin entwickelt (z.B. EP 2463662 A).

In Krankenhäusern ist oft ein Problem, dass manche Blutproben sehr dringend verarbeitet werden müssen, z.B. weil sich der Patient in einem lebensbedrohenden Zustand befindet, wogegen andere Blutproben, die z.B. zur Verfolgung des Therapieerfolges bei Patienten dienen, in keiner Weise zeitkritisch sind. Diese nicht zeitkritischen Blutproben können aber die Analysevorrichtung auf Stunden blockieren.

Es wurde daher in der WO 2012/110444 vorgeschlagen, dass die Rohrpoststation die entladenen Röhrchen in zwei verschiedene Trichter abgeben kann, wobei die Röhrchen eines Trichters Vorrang gegenüber den Röhrchen des anderen Trichters haben.

Im Normalbetrieb der Laboranbindung werden tausende Blutproben ins Labor gesendet und dort automatisch von der Rohrpoststation in den Auffangbehälter des Analysesystems übergeben. Dies führt bei Spitzenzeiten zu Kapazitätsengpässen, da diese Auffangbehälter nur eine gewisse Anzahl an Proben/Stunde verarbeiten können. Dies kann zu Stillständen der Rohrpostanlage führen, da die Entladung der Transporthülse vom System verhindert wird. Erst wenn der Auffangbehälter des Analysesystems wieder freie Kapazität hat, kann die Hülse entleert werden. Diese Stillstände der Rohrpost führen wiederum zu längeren Wartezeiten für neue, möglicherweise kritische Sendungen. In diesem Fall ist daher die Lösung gemäß der WO 2012/110444 nur bedingt wirksam: erst wenn alle Rohrposthülsen, die vor der kritischen Sendung angeliefert wurden, in den Auffangbehälter entleert werden konnten, kann die Rohrposthülse mit der kritischen Sendung in den anderen, bevorrangten Trichter entleert werden.

In zentralen Labors werden aber auch Blut-, Gewebe- und sonstige Proben von Patienten mit kritischen bzw. hochsicherheitsrelevanten Erkrankungen verarbeitet und analysiert, für die speziell geschultes Personal notwendig ist.

Um diese speziellen Proben von den "normalen" Proben zu trennen, werden diese derzeit mit Personal ins Labor gebracht, vom entsprechenden Laborpersonal übernommen und manuell in den Analyseprozess integriert. Um solche Hochsicherheitsproben per Standard-Rohrpost ins Labor befördern zu können, wären zusätzliche Stationen, die nur von dem entsprechenden Personal bedient werden dürfen, und somit auch zusätzliche Rohrleitungen usw. im Labor notwendig, was neben dem Platzbedarf auch höhere Kosten bedeuten würde. WO 2012/110444 A1 beschreibt eine gattungsgemäße Rohrpoststation.

### Darstellung der Erfindung

Es ist Aufgabe der vorliegenden Erfindung, diese Probleme zu beseitigen.

Diese Aufgabe wird durch eine Rohrpoststation nach Anspruch 1 gelöst, wobei die Rohrpoststation ein Separiermodul mit mehreren Kammern aufweist, dass die Rohrposthülsen in jeweils eine dieser Kammern entleerbar sind, und dass der Inhalt der Kammern entweder in den Auffangbehälter oder in eine davon getrennte Ausgabestelle entleerbar ist.

Die Anbindung von Rohrpoststationen an Laboranalysesysteme erfolgt also erfindungsgemäß nicht direkt, wie dies bislang üblich war, sondern über ein Separiermodul.

Bevorzugt ist das Separiermodul als über einem Boden drehbare Trommel mit mehreren Sektoren, die die Kammern bilden, ausgebildet. Dies lässt sich besonders einfach realisieren.

Durch das Vorsehen eines Separiermoduls zwischen Rohrpoststation und Auffangbehälter des Analysegeräts ergeben sich bei entsprechender Steuerung mehrere Vorteile.

So kann beim Absenden einer Rohrposthülse je nach dem Inhalt derselben ein Code für normal/speziell eingegeben werden, und die Steuerung kann dann bewirken, dass im Separiermodul der Inhalt einer Kammer, in die eine als "speziell" gekennzeichnete Rohrposthülse entleert wurde, nur in die getrennte Ausgabestelle entleerbar ist. Damit wird eine spezielle Behandlung solcher Laborproben gewährleistet.

Dabei kann auch vorgesehen werden, dass der Inhalt einer Kammer, in die eine als "speziell" gekennzeichnete Rohrposthülse entleert wurde, erst dann in die getrennte Ausgabestelle entleerbar ist, nachdem sich eine autorisierte Bedienperson identifiziert hat. Auf diese Weise ist sichergestellt, dass nur entsprechend geschultes Personal an solche besonderen Laborproben herankommt.

Weiters kann vorgesehen sein, dass der Inhalt einer Kammer, in die eine als "normal" gekennzeichnete Rohrposthülse entleert wurde, erst dann in den Auffangbehälter entleert wird, wenn dieser freie Kapazität hat. Auf diese Weise ergibt sich durch das Separiermodul ein Pufferspeicher, d.h. Rohrposthülsen können auch dann entleert werden, wenn der Auffangbehälter voll ist, sodass die Rohrpostanlage auch dann nicht blockiert wird. Dadurch wird auch bewirkt, dass als "speziell" gekennzeichnete Rohrposthülsen nicht verzögert werden, denn eine als "speziell" gekennzeichnete Rohrposthülse kann auch dann in eine Kammer und diese danach in die getrennte Ausgabestelle entleert werden, wenn andere Kammern als Pufferspeicher genützt werden.

Wenn also die Analysegeräte genügend Kapazität haben, d.h. der Auffangbehälter noch Kapazität hat, dann kann eine ankommende Rohrposthülse in eine Kammer und diese sofort in den Auffangbehälter entleert werden. Andernfalls kann der Inhalt der Rohrposthülse in der Kammer verbleiben, sodass die Rohrposthülse dennoch sofort wieder zurückgeschickt werden kann und die Rohrpostanlage nicht blockiert wird.

Wenn Blutproben transportiert werden, kann es bei einem Bruch eines Röhrchens leicht passieren, dass ein großer Teil der Anlage mit dem Blut kontaminiert wird und somit aufwändig dekontaminiert werden muss. Wenn im Boden an der Stelle der Entleerung der Rohrposthülsen ein Feuchtesensor angebracht ist, kann ein gebrochenes Röhrchen jedoch gleich erkannt und das Separiermodul gestoppt werden. Die Kontamination bleibt somit auf den Bereich der Trommel beschränkt. Keinesfalls wird der gesamte Auffangbehälter verunreinigt.

Um die Kammern zu entleeren, können im Boden Öffnungen für die Verbindung zum Auffangbehälter und zur davon getrennten Ausgabestelle vorgesehen sein. Wird eine Kammer über solch eine Öffnung gedreht, sollte der gesamte Inhalt herausfallen. Bei Transport von Blutproben werden die Röhrchen mit Klebeetiketten versehen, damit die Blutproben den Patienten zugeordnet werden können. Wenn diese Klebeetiketten nicht vollständig aufgeklebt sind, passiert es manchmal, dass ein Röhrchen an der Wand einer Kammer festklebt, wodurch das Röhrchen in der Kammer verbleibt. Im besten Fall führt dies zu einer Verzögerung der Auswertung der Blutprobe, im schlimmsten Fall zum Bruch des Röhrchens. Um dieses Problem zu beseitigen, ist es zweckmäßig, im Bereich dieser Öffnungen Sensoren zur Detektion von in der darüber befindlichen Kammer verbliebenen Gegenständen vorzusehen. Wenn einer der Sensoren ein Objekt detektiert, kann man das Separiermodul automatisch stoppen, und eine Bedienperson kann das Röhrchen händisch entfernen.

Schließlich ist es zweckmäßig, wenn ein Füllstandssensor zur Messung des Füllstandes zumindest einer Kammer vorgesehen ist. Auf diese Weise kann in der Zeit, in der der Auffangbehälter keine freie Kapazität hat, der Inhalt von als "normal" gekennzeichneten Rohrposthülsen so lange in dieselbe Kammer entleert werden, so lange der Füllstandssensor ausreichend freie Kapazität detektiert. Hintergrund dessen ist, dass normalerweise eine Kammer wesentlich mehr Röhrchen aufnehmen kann als in einer Rohrposthülse Platz finden, sodass jedenfalls mehrere Rohrposthülsen in dieselbe Kammer entleert werden können. Da aber zusätzlich die Rohrposthülsen oft nur teilweise gefüllt sind, ist nicht klar, wie viele Rohrposthülsen in dieselbe Kammer entleert werden können. Durch den Füllstandssensor kann man nun aber feststellen, ob noch genügend freier Raum für den Inhalt einer vollgefüllten Rohrposthülse vorhanden ist. Im einfachsten Fall ist der Füllstandssensor ein höhenjustierbarer Sensor, der detektiert, ob in einer bestimmten Höhe bereits Objekte vorhanden sind oder nicht. In der Zeit, in der der Auffangbehälter keine freie Kapazität hat, kann also der Inhalt von als "normal" gekennzeichneten Rohrposthülsen so lange in dieselbe Kammer entleert werden, so lange der Füllstandssensor ausreichend freie Kapazität detektiert.

Um in jedem Zustand der Anlage bzw. Prozesskette (Übergabe Rohrpost an Analysesystem) die Sicherheit von Hochsicherheitssendungen zu gewährleisten, werden kritische Sendungen in eine Kammer entleert, zu deren Inhalt nur entsprechendes Personal Zugang hat. Dieses kann dann diese Blutproben vorziehen oder aber - z.B. zur Vermeidung von Kreuzkontamination durch bestrahlte Proben - diese von anderen Proben getrennt analysieren.

Die Anforderungen an die dokumentierte Separierung und Übergabe an den Analyseprozess können durch eine spezielle Software erfüllt werden, die den Schritt in der Prozesskette zwischen der Rohrpoststation und der Laboranalysestraße (Blutautomaten, präanalytische Automaten) steuert und dokumentiert.

### Kurze Beschreibung der Zeichnungen

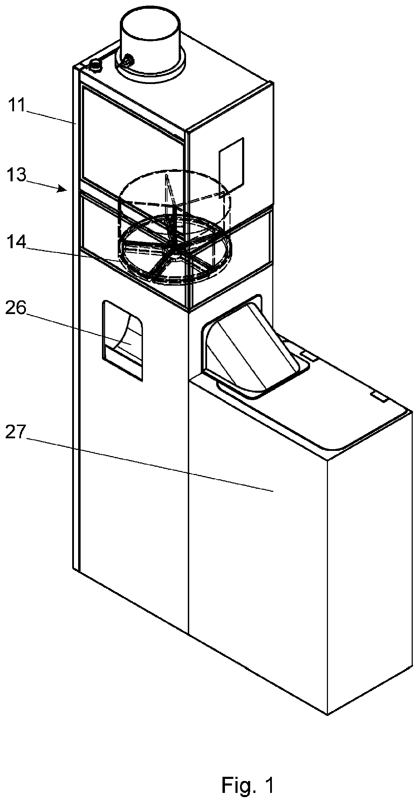

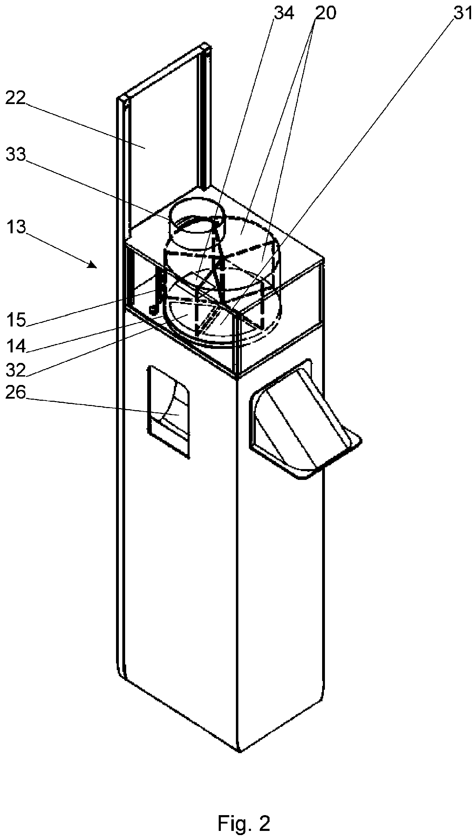

An Hand der beiliegenden Zeichnungen wird die vorliegende Erfindung näher erläutert. Es zeigt: Fig. 1 eine erfindungsgemäße Rohrpoststation mit Separiermodul und Auffangbehälter einer Analysevorrichtung; und Fig. 2 zeigt das Separiermodul ohne Rohrpoststation und ohne Auffangbehälter.

### Weg(e) zur Ausführung der Erfindung

An einem Grundgestell 22 sind eine Rohrpoststation 11 und darunter ein Separiermodul 13 angebracht. In der dargestellten Ausführung ist dieses als drehbare Trommel 14 ausgeführt, könnte aber auch mit einem Förderband realisiert werden. Damit der Inhalt einer Rohrposthülse in das Separiermodul entleert werden kann, weist dieses eine Befüllöffnung 33 auf.

Die Stellung der Trommel 14 wird über Positionsschalter 15 bestimmt. Der Antrieb erfolgt durch einen Motor mit Riemen- oder Zahnantrieb oder anderen üblichen Antriebsmodellen. Die dargestellte Ausführung zeigt fünf Kammern 20, die für die Pufferspeicherung von Standardproben oder die Speicherung von High-Security-Proben verwendbar sind. Die Kammern können in einen Auffangbehälter 27 eines Laborgerätes entleert werden (bei Standardproben), oder aber in eine davon getrennte Ausgabestelle 26 (für High-Security-Proben).

Zu diesem Zweck ist im Boden eine Öffnung 31 vorgesehen, die zum Auffangbehälter 27 führt, und eine Öffnung 32, die zur Ausgabestelle 26 führt. Wenn eine Kammer 20 über solch eine Öffnung 31 bzw. 32 gedreht wird, dann entleert sie in den Auffangbehälter 27 bzw. in die Ausgabestelle 26.

Die Rohrposthülsen werden durch Benützer mit den biologischen Proben beladen, die Proben können mit RFID oder Barcode gekennzeichnet sein. Diese Informationen können in die Datenbank der Rohrpostzentrale eingelesen werden.

Die befüllte Hülse wird in eine Station eingespeichert und die RFID-Daten der Hülse in die Datenbank eingelesen, somit wird eine Verknüpfung zwischen Ladegut und Rohrposthülse erstellt. Zusatzinformationen der Hülse (ID, Priorität, Empfangsziel, Heimadresse) werden eingelesen.

Zum Absenden der Hülse erfolgt wahlweise die Eingabe am Bedienterminal oder die ID-Identifizierung des Users.

Die zentrale Rohrpoststeuerung steuert in Abhängigkeit der Priorität der Sendung den Transport zur Zielstation über den effizientesten Weg.

Beim Empfang der Hülse an der Rohrpoststation 11 erfolgt ein Check der empfangenen Hülse zur Sicherstellung der korrekten Sendung. Außerdem wird die Priorität der Sendung ausgelesen.

Standardproben werden in den Auffangbehälter 27 eines Laboranalysesystems entleert. Im dargestellten Beispiel muss dazu die Kammer nach der Befüllung um drei Positionen im Uhrzeigersinn gedreht werden. Sollte der Auffangbehälter 27 voll oder defekt sein, wird ein Signal an die zentrale Rohrpoststeuerung gesendet. Somit werden die Proben im Separiermodul 13 in die dafür vorgesehenen Kammern 20, die als Pufferbehälter dienen, entleert. Es werden so lange Rohrposthülsen in dieselbe Kammer entleert, bis ein im Bereich der Befüllöffnung 33 angebrachter Füllstandssensor (nicht dargestellt) signalisiert, dass die Kammer nahezu voll ist. Dann wird die Trommel 14 um eine Position im Uhrzeigersinn verdreht, sodass wieder eine leere Kammer unter der Befüllöffnung 33 liegt. Dies kann zwar noch einmal wiederholt werden, sodass insgesamt drei Kammern 20 befüllt werden können; in diesem Fall steht allerdings keine Kammer mehr für die Entleerung in die High-Security-Ausgabestelle 26 zur Verfügung. Es ist somit beim dargestellten Beispiel günstig, wenn zwei Kammern 20 als Pufferspeicher ausreichen. Sobald der Auffangbehälter 27 des Analysesystems wieder verfügbar ist, werden die inzwischen befüllten Kammern 20 entleert.

Um kritische Proben von Standardproben gezielt und dokumentierbar trennen zu können, werden diese Sendungen mit einer eigenen Prioritätsstufe versehen. Bei Ankunft einer Hülse mit solch einer Prioritätsstufe wird ein Signal (Audiosignal, visuelles Signal, Nachricht) an den Benutzer bei der Rohrpoststation 11 gesendet. Das Ladegut wird durch Drehung der Trommel 14 um eine Position entgegen dem Uhrzeigersinn über die Öffnung 32 in die separate High-Security-Ausgabestelle 26 entleert. Erst nach erfolgtem ID-Check des Users (Legitimierung, Identifizierung, Dokumentation) wird die Probe zur Entnahme freigegeben.

Grundsätzlich wird jede Hülse nach der Entleerung mit einem Sensor auf vollständige Entleerung überprüft und anschließend an die Heimadresse retourniert.

Unter der Befüllöffnung 33 ist im Boden ein Feuchtesensor 34 angebracht. Wenn dieser Feuchtigkeit detektiert, deutet dies auf einen Bruch eines Röhrchens hin, und das Separiermodul 13 wird sofort gestoppt. Auf diese Weise bleibt die Kontamination auf das Separiermodul 13 beschränkt, der Auffangbehälter 27 bleibt sauber. Weiters sind im Bereich der Öffnungen 31, 32 Sensoren angebracht, die detektieren, ob die darüber befindliche Kammer leer ist. Wenn dies nicht der Fall ist, also Objekte detektiert werden, wird das Separiermodul 13 ebenfalls gestoppt.

## Patentansprüche

1. Rohrpoststation (11) zum Empfang von Rohrposthülsen, zum Entleeren derselben und zur Übergabe deren Inhalts in einen Auffangbehälter (27), **dadurch gekennzeichnet, dass** die Rohrpoststation (11) ein Auffangbehälter (27) und eine davon getrennte Ausgabestelle (26) aufweist, sowie ein Separiermodul (13) mit mehreren Kammern (20), wobei die Rohrposthülsen in jeweils eine dieser Kammern (20) entleerbar sind, und dass der Inhalt der Kammern (20) entweder in den Auffangbehälter (27) oder in die davon getrennte Ausgabestelle (26) entleerbar ist.

2. Rohrpoststation nach Anspruch 1, **dadurch gekennzeichnet, dass** das Separiermodul (13) als über einem Boden drehbare Trommel (14) mit mehreren Sektoren, die die Kammern (20) bilden, ausgebildet ist.

3. Rohrpoststation nach Anspruch 2, **dadurch gekennzeichnet, dass** im Boden an der Stelle der Entleerung der Rohrposthülsen ein Feuchtesensor (34) angebracht ist.

4. Rohrpoststation nach einem der Ansprüche 2 oder 3, **dadurch gekennzeichnet, dass** im Boden Öffnungen (31, 32) für die Verbindung zum Auffangbehälter (27) und zur davon getrennten Ausgabestelle (26) vorgesehen sind und dass im Bereich dieser Öffnungen (31, 32) Sensoren zur Detektion von in der darüber befindlichen Kammer verbliebenen Gegenständen vorgesehen sind.

5. Rohrpoststation nach einem der Ansprüche 1 bis 3, **dadurch gekennzeichnet, dass** ein Füllstandssensor zur Messung des Füllstandes zumindest einer Kammer vorgesehen ist.

6. Verfahren zum Steuern einer Rohrpostanlage mit einer Rohrpoststation (11) nach einem der Ansprüche 1 bis 5, **dadurch gekennzeichnet, dass** beim Absenden einer Rohrposthülse je nach dem Inhalt derselben ein Code für normal/speziell eingegeben wird, und dass im Separiermodul (13) der Inhalt einer Kammer (20), in die eine als "speziell" gekennzeichnete Rohrposthülse entleert wurde, nur in die getrennte Ausgabestelle (26) entleerbar ist.

7. Verfahren nach Anspruch 6, **dadurch gekennzeichnet, dass** der Inhalt einer Kammer (20), in die eine als "speziell" gekennzeichnete Rohrposthülse entleert wurde, erst dann in die getrennte Ausgabestelle (26) entleerbar ist, nachdem sich eine autorisierte Bedienperson identifiziert hat.

8. Verfahren nach Anspruch 6 oder 7, **dadurch gekennzeichnet, dass** der Inhalt einer Kammer (20), in die eine als "normal" gekennzeichnete Rohrposthülse entleert wurde, erst dann in den Auffangbehälter (27) entleert wird, wenn dieser freie Kapazität hat.

9. Verfahren nach Anspruch 8 für eine Rohrpoststation nach Anspruch 5, **dadurch gekennzeichnet, dass** in der Zeit, in der der Auffangbehälter (27) keine freie Kapazität hat, der Inhalt von als "normal" gekennzeichneten Rohrposthülsen so lange in dieselbe Kammer entleert wird, so lange der Füllstandssensor ausreichend freie Kapazität detektiert.

10. Verfahren nach einem der Ansprüche 6 bis 9 für eine Rohrpoststation nach Anspruch 3, **dadurch gekennzeichnet, dass** das Separiermodul (13) gestoppt wird, wenn der Feuchtesensor (34) Feuchtigkeit detektiert.

11. Verfahren nach einem der Ansprüche 6 bis 10 für eine Rohrpoststation nach Anspruch 4, **dadurch gekennzeichnet, dass** das Separiermodul (13) gestoppt wird, wenn einer der Sensoren ein Objekt detektiert.

## Claims

1. A pneumatic mail station (11) for receiving pneumatic mail capsules, for emptying the same and for transferring their contents into a collecting container (27), **characterised in that** the pneumatic mail station (11) has a collecting container (27) and an outlet point (26) which is separate therefrom, as well as a separating module (13) which has a plurality of chambers (20), the pneumatic mail capsules being emptyable into, in each case, one of these chambers (20), and **in that** the contents of the chambers (20) are emptyable either into the collecting container (27) or into the outlet point (26) which is separate therefrom.

2. A pneumatic mail station according to Claim 1, **characterised in that** the separating module (13) is formed as a drum (14) which has a plurality of sectors and can be rotated above a bottom portion, the sectors providing/defining the chambers (20).

3. A pneumatic mail station according to Claim 2, **characterised in that** a sensor (34) for detecting dampness is mounted in the bottom portion at the location where the pneumatic mail capsules are emptied.

4. A pneumatic mail station according to either of Claims 2 and 3, **characterised in that** openings (31, 32) are provided in the bottom portion for connecting to the collecting container (27) and to the outlet point (26) which is separate therefrom, and **in that** sensors are provided in the region of these openings (31, 32) for detecting items remaining in the chambers which are located above the openings.

5. A pneumatic mail station according to any of Claims 1 to 3, **characterised in that** a filling level sensor is provided for measuring the filling level of at least one chamber.

6. A method for controlling a pneumatic mail system having a pneumatic mail station (11) according to any of Claims 1 to 5, **characterised in that** when a pneumatic mail capsule is dispatched, a code for normal or special is input according to the contents of the capsule, and **in that** in the separating module (13), the contents of a chamber (20) into which a pneumatic mail capsule designated as "special" have been emptied, can only be emptied into the separate outlet point (26).

7. A method according to Claim 6, **characterised in that** the contents of a chamber (20) into which a pneumatic mail capsule designated as "special" has been emptied, can only be emptied into the separate outlet point (26), after an authorized member of the operating personnel has identified himself/herself.

8. A method according to Claim 6 or 7, **characterised in that** the contents of a chamber (20) into which a pneumatic mail capsule designated as "normal" has been emptied, can only be emptied into the collecting container (27), when this has free capacity.

9. A method according to Claim 8 for a pneumatic mail station according to Claim 5, **characterised in that** during the time period when the collecting container (27) has no free capacity, the contents of pneumatic mail capsules designated as "normal" are emptied into the same chamber as long as the filling level sensor detects sufficient free capacity.

10. A method according to any of Claims 6 to 9 for a pneumatic mail station according to Claim 3, **characterised in that** the separating module (13) is stopped if the dampness sensor (34) detects dampness.

11. A method according to any of Claims 6 to 10 for a pneumatic mail station according to Claim 4, **characterised in that** the separating module (13) is stopped if any of the sensors detects an item.

## Revendications

1. Terminal de transport par tube pneumatique (11), permettant de recevoir des curseurs, de les vider et de transférer leur contenu dans un récipient (27), **caractérisé en ce que** le terminal de transport par tube pneumatique (11) comporte un récipient (27) et un poste de distribution (26) séparé de ce dernier ainsi qu'un module de séparation (13) pourvu de plusieurs chambres (20), les curseurs pouvant chacun être vidés dans l'une de ces chambres (20), et que le contenu des chambres (20) peut être vidé soit dans le récipient (27) soit dans le poste de distribution (26) séparé de ce dernier.

2. Terminal de transport par tube pneumatique selon la revendication 1, **caractérisé en ce que** le module de séparation (13) est réalisé sous forme d'un tambour (14) pouvant être tourné au-dessus d'un fond et comportant plusieurs secteurs lesquels constituent les chambres (20) .

3. Terminal de transport par tube pneumatique selon la revendication 2, **caractérisé en ce qu'**un capteur d'humidité (34) est disposé dans ledit fond, à l'endroit où les curseurs sont vidés.

4. Terminal de transport par tube pneumatique selon l'une des revendications 2 ou 3, **caractérisé en ce que** ledit fond est pourvu d'ouvertures (31, 32) permettant une communication avec le récipient (27) et avec le poste de distribution (26) séparé de ce dernier, et que des capteurs sont disposés à proximité de ces ouvertures (31, 32) pour détecter des objets restés dans la chambre située au-dessus.

5. Terminal de transport par tube pneumatique selon l'une des revendications 1 à 3, **caractérisé en ce qu'**il comporte un capteur de niveau de remplissage permettant de mesurer le niveau de remplissage d'au moins une chambre.

6. Procédé de commande d'un système de transport par tube pneumatique comportant un terminal de transport par tube pneumatique (11) selon l'une des revendications 1 à 5, **caractérisé en ce que** lors de l'envoi d'un curseur, on entre un code identifiant le contenu de celui-ci comme normal/spécial et qu'au sein du module de séparation (13), le contenu d'une chambre (20) dans laquelle a été vidé un curseur identifié comme « spécial » ne peut être vidé que dans le poste de distribution (26) séparé.

7. Procédé selon la revendication 6, **caractérisé en ce que** le contenu d'une chambre (20) dans laquelle a été vidé un curseur identifié comme « spécial » ne peut être vidé dans le poste de distribution (26) séparé qu'après vérification de l'identité d'un opérateur autorisé.

8. Procédé selon les revendications 6 ou 7, **caractérisé en ce que** le contenu d'une chambre (20) dans laquelle a été vidé un curseur identifié comme « normal » n'est vidé dans le récipient (27) que si ce dernier présenté des capacités libres.

9. Procédé selon la revendication 8 destiné à un terminal de transport par tube pneumatique selon la revendication 5, **caractérisé en ce que,** lorsque le récipient (27) ne présente pas de capacités libres, le contenu de curseurs identifiés comme « normaux » est vidé dans la même chambre tant que le capteur de niveau de remplissage détecte suffisamment de capacités libres.

10. Procédé selon l'une des revendications 6 à 9 destiné à un terminal de transport par tube pneumatique selon la revendication 3, **caractérisé en ce que** le module de séparation (13) est arrêté si le capteur d'humidité (34) détecte de l'humidité.

11. Procédé selon l'une des revendications 6 à 10 destiné à un terminal de transport par tube pneumatique selon la revendication 4, **caractérisé en ce que** le module de séparation (13) est arrêté si l'un des capteurs détecte un objet.
